# EUROPEAN PATENT APPLICATION

(11) **EP 3 197 118 A1**
(43) Date of publication of application: **26.07.2017**
(21) Application number: 14884319.6
(22) Date of filing: 31.12.2014
(51) Int. Cl.: H04L 29/06

(54) **NETWORK ADDRESS TRANSLATION METHOD AND DEVICE**

(30) Priority: 18.09.2014 CN 201410478923
(71) Applicant: ZTE Corporation, Shenzhen, Guangdong 518057 (CN)
(72) Inventor: HU, Yifen, Shenzhen Guangdong 518057 (CN); CAI, Lei, Shenzhen Guangdong 518057 (CN); BAO, Juntao, Shenzhen Guangdong 518057 (CN); YANG, Tao, Shenzhen Guangdong 518057 (CN); YI, Hong, Shenzhen Guangdong 518057 (CN)
(74) Representative: Lavoix
(86) International application number: PCT/CN2014/096030
(87) International publication number: WO 2015/131653

(57) **Abstract**

A network address translation (NAT) method and device. The method comprises: generating on a primary NAT device a translation entry for a message to be translated; backing up the translation entry to the primary NAT device and a secondary NAT device of the NAT device; when the primary NAT device or the secondary NAT device is operating in replacement of other NAT devices and is to translate the network address of the message that corresponds to the translation entry, said device can directly search for the translation entry in the storage of the device itself and translate the network address for the corresponding message according to the translation entry; the translation entry comprises the source network address of the message to be translated and the target network address obtained by translating the source network address. The device comprises a translation entry generation module and a translation entry backup module. The method and device of the technical solutions of the present invention ensure that no interruption due to switching occurs during a NAT process.

## Description

### TECHNICAL FIELD

The disclosure relates to the technical field of Network Address Translation (NAT), and in particular to an NAT method and apparatus.

### BACKGROUND

At present, with the rapid development of network services, the requirements of customers for the quality of services are high increasingly. An NAT service is a basic service solving shortage of Internet Protocol Version 4 (IPV4) addresses at present. The IPV4 may effectively and smoothly transit to a V6 stage by perfecting functions thereof.

When IPV4 addresses are running out nowadays, an NAT technology promotes making of many Remote Function Call (RFC) draft agreements, which are mainly centralized in various measures during a process of filtration from the IPV4 to the IPV6 such as NAT44, dual-stack lite, NAT64 and NAT46.

NAT in the related art is usually arranged with a plurality of NAT devices such as a Central Processing Unit (CPU). Each NAT device is correspondingly provided with a storage apparatus arranged to store a message translated on the NAT device or translation entries of other data. When an NAT device is faulty, other NAT devices receive data on the faulty NAT device, acquire the translation entries from the storage apparatus of the faulty NAT device, and translate a data address in replacement of the faulty NAT device.

In an NAT process in the related art, when an NAT device is faulty and is replaced by other NAT devices for translation, a translation session is prone to interruption, thereby influencing the speed and continuity of data transmission.

### SUMMARY

In view of the above, the disclosure provides an NAT method and apparatus, capable of ensuring that no interruption due to switching occurs during a (Network Address Translation) NAT process when data is switched from a faulty NAT device to another NAT device.

To solve the above technical problems, the technical solutions are implemented as follows.

There is provided an NAT method, including:
a translation entry for a message to be translated is generated on a master NAT device;
the translation entry is backed up into the master NAT device and a slave NAT device among NAT devices; and
when the master NAT device or the slave NAT device performs NAT on the message corresponding to the translation entry in replacement of other NAT devices, the master NAT device or the slave NAT device is directly searched for the translation entry and performs NAT on the message corresponding to the translation entry according to the translation entry,
herein the translation entry includes a source network address of the message to be translated and a target network address obtained by translating the source network address.

In an embodiment, a physical port of the master NAT device and a physical port of the slave NAT device may belong to an identical virtual port.

In an embodiment, before the master NAT device or the slave NAT device is directly searched for the translation entry and performs NAT on the message corresponding to the translation entry according to the translation entry when the master NAT device or the slave NAT device performs NAT on the message corresponding to the translation entry in replacement of other NAT devices, the method may further include:
a physical interface of the master NAT device for NAT and a physical interface of the slave NAT device for NAT are added into an identical virtual port.

In an embodiment, the virtual port may be a virtual port to which the physical port of the master NAT device and the physical port of the slave NAT device both belong.

In an embodiment, the virtual port may be a logic port Smartgroup formed by link aggregation.

In an embodiment, the method may further include:
a message received by a logic port Smartgroup formed by link aggregation is sent to a master NAT device or a slave NAT device corresponding to the received message according to a traffic balancing table pre-generated on the logic port Smartgroup.

In an embodiment, after the translation entry is backed up into the master NAT device and the slave NAT device among the NAT devices, the method may further include:
the slave NAT device is switched to a master NAT device; and
the post-switching master NAT device is enabled to receive a message which should be translated by the pre-switching master NAT device, and to directly perform NAT on the message received by the post-switching master NAT device according to a translation entry backed up in the post-switching master NAT device.

In an embodiment, the method may further include:
a message indicating change of the master NAT device and the slave NAT device is received; and
the translation entry is backed up on all master NAT devices and slave NAT devices before and after the change.

There is further provided an NAT apparatus, including a translation entry generation module, a translation entry backup module and a query module, in which:
the translation entry generation module is arranged to generate, on a master NAT device, a translation entry for a message to be translated;
the translation entry backup module is arranged to back up the translation entry into the master NAT device and a slave NAT device among NAT devices; and
the query module is arranged to, when the master NAT device or the slave NAT device performs NAT on the message corresponding to the translation entry in replacement of other NAT devices, directly search the master NAT or the slave NAT device for the translation entry, and perform NAT on the message corresponding to the translation entry according to the translation entry,
herein the translation entry includes a source network address of the message to be translated and a target network address obtained by translating the source network address.

In an embodiment, a physical port of the master NAT device and a physical port of the slave NAT device may belong to an identical virtual port; and
the apparatus may further include a device arrangement module,
herein the device arrangement module is arranged to add the physical interface of the master NAT device for NAT and the physical interface of the slave NAT device for NAT into the virtual port.

In an embodiment, a virtual port group may be a logic port Smartgroup formed by link aggregation.

In an embodiment, the apparatus may further include a traffic balancing module, herein
the traffic balancing module is arranged to send, according to a traffic balancing table pre-generated on the logic port Smartgroup formed by link aggregation, a message received by the logic port Smartgroup to a master NAT device or a slave NAT device corresponding to the message received by the logic port Smartgroup.

In an embodiment, the apparatus may further include a switching module, herein
the switching module is arranged to switch the slave NAT device to the master NAT device, and enable the post-switching master NAT device to receive a message which should be translated by the pre-switching master NAT device and to directly perform NAT on the message received by the post-switching master NAT device according to a translation entry backed up in the post-switching master NAT device.

In an embodiment, the apparatus may further include a change message receiving module, herein
the change message receiving module is arranged to receive a message indicating change of the master NAT device and the slave NAT device; and
the translation entry backup module is further arranged to back up the translation entry on all master NAT devices and slave NAT devices before and after the change.

There is further provided a computer program, including program instructions that, when executed by a computer, cause the computer to execute any aforementioned NAT method.

There is further provided a carrier carrying the computer program.

From the above, it can be seen that according to the NAT method and apparatus provided in the disclosure and the embodiments thereof, a translation entry created by a master NAT device for creating the translation entry is backed up on all NAT devices, such that when a slave NAT device is switched to the master NAT device or a traffic of the slave NAT device is sent to other NAT devices for translation, the translation entry backed up by the device can be directly utilized, thereby reducing interruption of a translation process caused by switching of a traffic due to device faults or other reasons, and effectively reducing interruption of a network session caused by switching of a traffic from an NAT device to another NAT device. Besides, the method and apparatus provided in the disclosure and the embodiments thereof can allow, all messages for which translation entries have been created, to be sent to an NAT device for NAT, a master network device and a slave network device may serve as master and slave devices of the opposite parties, thereby implementing mutual backup and share, and improving the effect of traffic sharing of a slave NAT device for a master NAT device.

### BRIEF DESCRIPTION OF THE DRAWINGS

Fig. 1 is a flowchart of an NAT method according to an embodiment of the disclosure; and
Fig. 2 is a structural diagram of an NAT apparatus according to an embodiment of the disclosure.

### DETAILED DESCRIPTION

The embodiment of the disclosure will be described below with the drawings of the description.

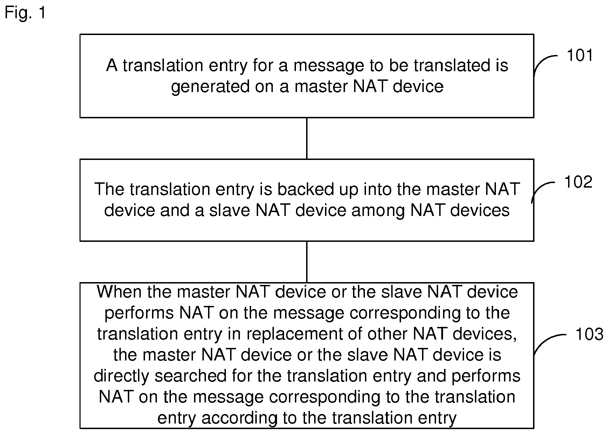

The embodiment of the disclosure firstly provides an NAT method, which includes the steps as shown in Fig. 1.

Step 101: A translation entry for a message to be translated is generated on a master NAT device.

Step 102: The translation entry is backed up into the master NAT device and a slave NAT device among NAT devices.

Step 103: When the master NAT device or the slave NAT device performs NAT on the message corresponding to the translation entry in replacement of other NAT devices, the master NAT device or the slave NAT device is directly searched for the translation entry and performs NAT on the message corresponding to the translation entry according to the translation entry.

In an embodiment, the translation entry includes a source network address of the message to be translated and a target network address obtained by translating the source network address.

According to the NAT method in the related art, after a message is switched from an NAT device to another NAT device, said another NAT device must call a translation entry from a storage apparatus corresponding to the NAT device; since the translation entry calling process needs a certain time, an NAT operation on the NAT device before switching cannot be continuously executed, thereby causing interruption of NAT and interruption of a network session. From the above, it may be seen that according to the NAT method provided in the embodiment of the disclosure, when a message that is translating a network address on an original master NAT device is switched to an original slave NAT device for translation and when a message that is translating a network address on the original slave NAT device is switched to the original master NAT device for translation or when a message that is translating a network address on an NAT device is switched to another NAT device for translation, the NAT device to which the message is switched can be allowed to directly call a translation entry stored by the device, thereby ensuring the continuity of NAT, and avoiding interruption of a network session caused by translation replacement of NAT devices.

In a specific embodiment of the disclosure, the translation entry includes a source network address of the message to be translated and a target network address obtained by translating the source network address. When the master NAT device or the slave NAT device receives a message carrying the source network address, the message may be sent to the target network address according to the translation entry.

In some embodiments of the disclosure, a physical port of the master NAT device and a physical port of the slave NAT device belong to an identical virtual port.

Before the master NAT device or the slave NAT device performs NAT on the message corresponding to the translation entry in replacement of other NAT devices, the method further includes the following step.

The physical port of the master NAT device for NAT and the physical port of the slave NAT device for NAT are added into an identical virtual port. In an embodiment, the virtual port may be the virtual port to which the physical port of the master NAT device and the physical port of the slave NAT device belong.

In some embodiments of the disclosure, the virtual port is a logic port Smartgroup formed by link aggregation.

In some embodiments of the disclosure, after the translation entry is backed up into the master NAT device and the slave NAT device among the NAT devices, the method further includes the following steps.

The slave NAT device is switched to the master NAT device.

The post-switching master NAT device is enabled to receive a message which should be translated by the pre-switching master NAT device, and to directly perform NAT on the message received by the post-switching master NAT device according to a translation entry backed up in the post-switching master NAT device.

In some embodiments of the disclosure, the method further includes that: a message received by a logic port Smartgroup formed by link aggregation is sent to a master NAT device or a slave NAT device corresponding to the received message according to a traffic balancing table pre-generated on the logic port Smartgroup.

When the Smartgroup port receives the message, the received message will be sent to the corresponding master NAT device for NAT according to a traffic balancing table, or sent to the corresponding slave NAT device for NAT. Since the translation entry on the master NAT device is synchronized to the slave NAT device, the message from which the translation entry may be found may be sent to the slave NAT device for translation, thus enhancing the effect of traffic sharing of the slave NAT device for the master NAT device.

In a specific application example of the disclosure, the method may include the following steps.

Step 201: An NAT device is bound with a Smartgroup port.

The NAT device in the present embodiment is preferred to be an NAT device running on a line card, an NAT device interface on the line card is bound to the Smartgroup port, and a message to be translated will be shared under the NAT device interface bound to the Smartgroup port.

More specifically, firstly, it is supposed that two NAT devices are PFU-0/1/0 and PFU-0/2/0, interfaces fei-0/1/0/1 and fei-0/2/0/1 of the two NAT devices are bounded to the Smartgroup port smartgroup1, and the following instruction may be adopted.
interface smartgroup1
ip address 172.0.0.1 255.255.255.0
interface fei-0/1/0/1
smartgroup 1 mode on
interface fei-0/2/0/1
smartgroup 1 mode on;
wherein, ip address 172.0.0.1 255.255.255.0 represents that a port IP address of smartgroup1 is 172.0.0.1 255.255.255.0; and when multiple NAT devices are bound to a Smartgroup port, one of the NAT devices is selected as a master NAT device, and other NAT devices serve as slave NAT devices. An interface of the master NAT device serves as a master interface. When data is sent to the Smartgroup port for the first time, the data should be allocated to the master NAT device, a translation entry is generated by the master NAT device after NAT, and the translation entry is synchronously backed up in storage apparatuses corresponding to all NAT devices.

Then, the NAT device is set to execute NAT, that is, an NAT function among the NAT devices is enabled, and the following instruction may be adopted.
cgn 1
location
node 1 PFU-0/1/0
node 2 PFU-0/2/0;
the instruction configures two NAT devices PFU-0/1/0 and PFU-0/2/0 to be capable of executing an NAT operation.

Then, a Smartgroup port is bounded under an NAT address pool of the master NAT device and the slave NAT device, such that an address in the address pool is only used for performing NAT on a message coming from the Smartgroup interface. The following instruction may be adopted for arrangement.
cgn-pool 1
interface smartgroup1

Step 202: The NAT device receives a message to be translated.

In a specific embodiment, as for an outbound message received by the NAT device and sent by the NAT device bound by the Smartgroup port and a message received at the port fei-0/1/0/1 of the master NAT device PFU-0/1/0, a translation entry backed up by the master NAT device is searched firstly; if a translation entry corresponding to the received message exists, a network address of the message is translated according to the corresponding translation entry; and if a translation entry corresponding to the received message does not exist, a translation entry is created on the master NAT device, and NAT is performed on the message. As for an outbound message received at the port fei-0/2/0/1 of the slave NAT device PFU-0/2/0, a translation entry backed up by the slave NAT device is searched firstly; if a translation entry corresponding to the received message exists, a network address of the message is translated according to the foregoing corresponding translation entry; and if a translation entry corresponding to the received message does not exist, the message is sent to the master NAT device, so the master NAT device creates a translation entry for translating a network address of the message, and synchronously backs up the created translation entry to storage apparatuses corresponding to all NAT devices.

A specific format of the translation entry may be as shown in the following specific embodiment.

Network address information carried in the outbound message received by the master NAT device is: protocol tcp; src_ip 172.0.0.2; dst_ip 100.1.1.100; src_port 2000; dst_port 80; translated network address information is: protocol tcp; src_ip 100.0.0.2; dst_ip 100.1.1.100; src_port 7000; dst_port 80; and a generated translation entry is: src_ip 172.0.0.2; src_port 2000; <->src_ip 100.0.0.2; src_port 7000. Network address information received by the slave NAT device is: protocol tcp; src_ip 172.0.0.3; dst_ip 100.1.1.100; src_port 2000; dst_port 80; translated network address information is: protocol tcp; src_ip 100.0.0.3; dst_ip 100.1.1.100; src_port 7000; dst_port 80; and a correspondingly generated translation entry is: src_ip 172.0.0.3; src_port 2000; <->src_ip 100.0.0.3; src_port 7000.

The storage apparatus corresponding to the NAT device may refer to the NAT device itself or may be an individual storage apparatus.

As for an inbound message sent by other devices, which are never bound to the Smartgroup port, in the NAT devices, an NAT route is searched, a smartgroup identifier is acquired from a message route, a traffic balancing table is searched according to the smartgroup identifier, and the smartgroup identifier is sent to a corresponding NAT device for NAT. If the NAT device is the master NAT device, a translation entry corresponding to the received message is searched; if a translation entry exists, translation is performed directly according to the translation entry, and NAT is performed; and if a translation entry does not exist, the message is abandoned. If the NAT device is the slave NAT device, a translation entry corresponding to the received message is searched; if a translation entry exists, translation is performed directly, and NAT is performed; and if a translation entry does not exist, the message is sent to the master NAT device.

Step 203: The slave NAT device is switched to a master NAT device, and translates a message, which should be translated by the original master NAT device, in replacement of the original master NAT device.

If the master NAT device is faulty, one of the slave NAT devices will be switched to a master NAT device, and translate a message, which should be translated by the original master NAT device, in replacement of the original master NAT device. For example, the master NAT device PFU-0/1/0 is abnormal, the slave NAT device PFU-0/2/0 will be switched to a master NAT device, and a message on the original master NAT device PFU-0/1/0 is sent to the slave NAT device PFU-0/2/0 to be translated. Due to hot standby of the translation entry, a message NAT process is performed continuously, and a network session will not be interrupted.

Step 204: The master NAT device translates a message, which should be translated by the slave NAT device, in replacement of the slave NAT device.

If the slave NAT device is faulty, the master NAT device is unchanged. For example, the slave NAT device PFU-0/2/0 is faulty, a message on the slave NAT device PFU-0/2/0 is sent to the master NAT device PFU-0/1/0 for NAT. Due to hot standby of the translation entry, a network session will not be interrupted.

Step 203 and Step 204 may be executed in any order at any time when Step 202 is executed.

In some embodiments of the disclosure, the method further includes the following steps.

A message indicating change of the master NAT device and the slave NAT device is received.

The translation entry is backed up on all master NAT devices and slave NAT devices before and after the change.

For example, if a port of an NAT device bound to a Smartgroup port is changed or a Smartgroup is added or removed, a newly mapped translation entry will be refreshed so as to keep the entry from aging deletion. For example, fei-0/2/0/1 is unbound from the Smartgroup port smartgroup1, the translation entry will be continuously updated on the NAT device PFU-0/1/0 and the NAT device PFU-0/2/0, a message of the original NAT device PFU-0/2/0 is kept translated continuously on the NAT device PFU-0/1/0, and a session is not interrupted. Few minutes later, the interface fei-0/2/0/1 is re-added into the Smartgroup port smartgroup1, the translation entry is continuously updated on the NAT device PFU-0/1/0 and the NAT device PFU-0/2/0, some traffics come from the interface fei-0/2/0/1, the message is kept translated continuously on PFU-0/2/0, and a session is not interrupted.

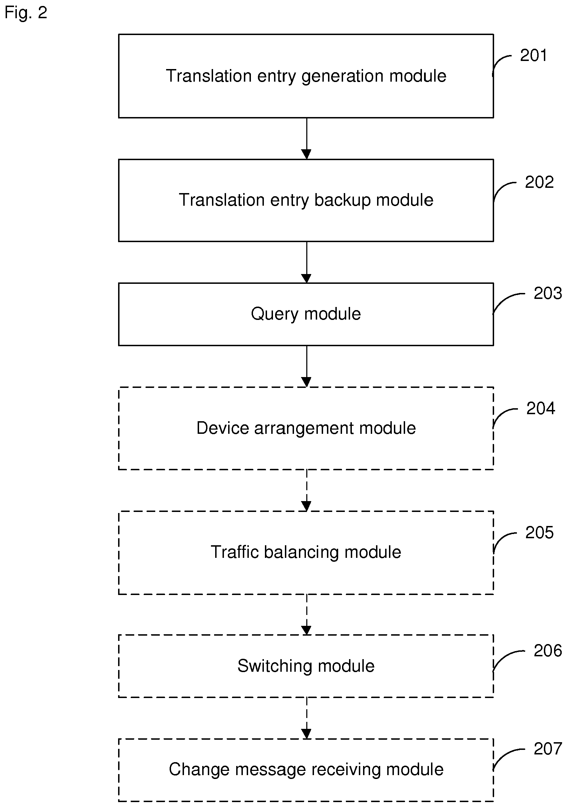

The embodiment of the disclosure also provides an NAT apparatus. As shown in Fig. 2, the apparatus structurally includes:
a translation entry generation module 201 arranged to generate, on a master NAT device, a translation entry for a message to be translated;
a translation entry backup module 202 arranged to back up the translation entry into the master NAT device and a slave NAT device among NAT devices; and
a query module 203 arranged to, when the master NAT device or the slave NAT device performs NAT on the message corresponding to the translation entry in replacement of other NAT devices, directly search the master NAT device or the slave NAT device for the translation entry, and perform NAT on the message corresponding to the translation entry according to the translation entry.

In an embodiment, the translation entry includes a source network address of the message to be translated and a target network address obtained by translating the source network address.

In a specific embodiment of the disclosure, a physical port of the master NAT device and a physical port of the slave NAT device belong to an identical virtual port.

The apparatus further includes:
a device arrangement module 204 arranged to add the physical port of the master NAT device for NAT and the physical port of the slave NAT device for NAT into the virtual port. In an embodiment, the virtual port may be the virtual port to which the physical port of the master NAT device and the physical port of the slave NAT device belong.

In a specific embodiment of the disclosure, the virtual port is a logic port Smartgroup formed by link aggregation.

In a specific embodiment of the disclosure, still referring to Fig. 2, the apparatus further includes:
a traffic balancing module 205 arranged to send a message received by the logic port Smartgroup formed by the link aggregation to the master NAT device or the slave NAT device corresponding to the message received by Smartgroup according to a traffic balancing table pre-generated on the logic port Smartgroup formed by the link aggregation.

In a specific embodiment of the disclosure, the apparatus further includes:
a switching module 206 arranged to switch the slave NAT device to the master NAT device, enable the post-switching master NAT device to receive a message which should be translated by the pre-switching master NAT device and to directly perform NAT on the message received by the post-switching master NAT device according to a translation entry backed up in the post-switching master NAT device.

In a specific embodiment of the disclosure, the apparatus further includes:
a change message receiving module 207 arranged to receive a message indicating change of the master NAT device and the slave NAT device, wherein
the translation entry backup module 202 is further arranged to back up the translation entry on all master NAT devices and slave NAT devices before and after the change.

The embodiment of the disclosure also discloses a computer program which includes a program instruction. When the program instruction is executed by a computer, any NAT method may be executed by the computer.

The embodiment of the disclosure also discloses a carrier carrying the computer program.

From the above, it may be seen that according to the NAT method and apparatus provided in the disclosure and the embodiment thereof, a translation entry created by a master NAT device for creating the translation entry is backed up on all NAT devices, such that when a slave NAT device is switched to the master NAT device or a traffic of the slave NAT device is sent to other NAT devices for translation, the translation entry backed up by the device can be directly utilized, thereby reducing interruption of a translation process caused by switching of a traffic due to device faults or other reasons, and effectively reducing interruption of a network session caused by switching of a traffic from an NAT device to another NAT device. Besides, the method and apparatus provided in the disclosure and the embodiments thereof can allow, all messages for which translation entries have been created, to be sent to an NAT device for NAT, a master network device and a slave network device may serve as master and slave devices of the opposite parties, thereby implementing mutual backup and share, and improving the effect of traffic sharing of a slave NAT device for a master NAT device.

In the related art, only when a translation entry is backed up from a master NAT device to a slave NAT device, if the master NAT device is faulty, the slave NAT device operates in replacement, and if the master NAT device is not faulty, the slave NAT device does not translate a message.

In the embodiment of the disclosure,
1. a master NAT device may have a plurality of slave NAT devices, so the safety is improved, and when the master NAT device is faulty, one of the slave NAT devices may become a master NAT device for continuous operation;
2. master and slave network devices may forward a message, if the slave network device does not have a translation entry, the message is sent to the master network device, and if the slave network device has a translation entry, the message is directly translated;
3. the master and slave NAT devices are relative to a virtual port, there may be a plurality of master and slave NAT devices for a plurality of virtual ports, and the NAT devices may serve as master and slave NAT devices mutually; and
4. it can be seen from 1, 2 and 3 that, compared with the related art, NAT is better in load share and safe backup; for example, a network device 1 is a master device for a virtual port 1, and a network device 2 is a slave device; a network device 1 is a slave device for a virtual port 2, and a network device 2 is a master device; the effect is that a translation entry generated by traffic coming from the virtual port 1 on the network device 1 is backed up to the network device 2, and the traffic coming from the virtual port 1 may be forwarded on the network device 1 and the network device 2 (after the translation entry of the network device 1 is available); likewise, an entry created by traffic coming from the virtual port 2 on the network device 2 is backed up to the network device 1, and may be forwarded on the network device 1 (after the translation entry of the network device 2 is available) and the network device 2; thus, the network device 1 and the network device 2 create entries simultaneously, translate messages simultaneously, and share loads; and when the network device 1 or 2 is faulty, the other one may operate in replacement for safe backup.

It will be appreciated that multiple embodiments described in the description are only intended to illustrate and explain the disclosure, and not intended to limit the disclosure. Moreover, the embodiments in the application and the characteristics in the embodiments may be combined without collisions.

Apparently, those skilled in the art may make various modifications and transformations on the disclosure without departing from the spirit and scope of the disclosure. Thus, if these modifications and transformations of the disclosure fall within the scope of the claims of the disclosure and an equal technology thereof, the disclosure is intended to include these modifications and transformations.

### INDUSTRIAL APPLICABILITY

According to the NAT method and apparatus provided in the disclosure and the embodiment thereof, a translation entry created by a master NAT device for creating the translation entry is backed up on all NAT devices, such that when a slave NAT device is switched to the master NAT device or a traffic of the slave NAT device is sent to other NAT devices for translation, the translation entry backed up by the device can be directly utilized, thereby reducing interruption of a translation process caused by switching of a traffic due to device faults or other reasons, and effectively reducing interruption of a network session caused by switching of a traffic from an NAT device to another NAT device. Besides, the method and apparatus provided in the disclosure and the embodiments thereof can allow, all messages for which translation entries have been created, to be sent to an NAT device for NAT, a master network device and a slave network device may serve as master and slave devices of the opposite parties, thereby implementing mutual backup and share, and improving the effect of traffic sharing of a slave NAT device for a master NAT device. Therefore, the disclosure has great industrial applicability.

## Claims

1. A Network Address Translation (NAT) method, comprising:
generating, on a master NAT device, a translation entry for a message to be translated;
backing up the translation entry into the master NAT device and a slave NAT device among NAT devices; and
when the master NAT device or the slave NAT device performs NAT on the message corresponding to the translation entry in replacement of other NAT devices, directly searching the master NAT device or the slave NAT device for the translation entry and performing NAT on the message corresponding to the translation entry according to the translation entry,
wherein the translation entry comprises a source network address of the message to be translated and a target network address obtained by translating the source network address.

2. The NAT method according to claim 1, wherein a physical port of the master NAT device and a physical port of the slave NAT device belong to an identical virtual po rt.

3. The NAT method according to claim 1, further comprising: before directly searching the master NAT device or the slave NAT device for the translation entry and performing NAT on the message corresponding to the translation entry according to the translation entry when the master NAT device or the slave NAT device performs NAT on the message corresponding to the translation entry in replacement of other NAT devices,
adding a physical interface of the master NAT device for NAT and a physical interface of the slave NAT device for NAT into an identical virtual port.

4. The NAT method according to claim 3, wherein the virtual port is a virtual port to which the physical port of the master NAT device and the physical port of the slave NAT device both belong.

5. The NAT method according to any one of claims 2-4, wherein the virtual port is a logic port Smartgroup formed by link aggregation.

6. The NAT method according to claim 3, further comprising:
sending, according to a traffic balancing table pre-generated on a logic port Smartgroup formed by link aggregation, a message received by the logic port Smartgroup to a master NAT device or a slave NAT device corresponding to the received message.

7. The NAT method according to claim 1, further comprising: after backing up the translation entry into the master NAT device and the slave NAT device among the NAT devices,
switching the slave NAT device to a master NAT device; and
enabling the post-switching master NAT device to receive a message which should be translated by a pre-switching master NAT device and to directly perform NAT on the message received by the post-switching master NAT device according to a translation entry backed up in the post-switching master NAT device.

8. The NAT method according to claim 1, further comprising:
receiving a message indicating change of the master NAT device and the slave NAT device; and
backing up the translation entry on all master NAT devices and slave NAT devices before and after the change.

9. A Network Address Translation (NAT) apparatus, comprising a translation entry generation module, a translation entry backup module and a query module, wherein
the translation entry generation module is arranged to generate, on a master NAT device, a translation entry for a message to be translated;
the translation entry backup module is arranged to back up the translation entry into the master NAT device and a slave NAT device among NAT devices; and
the query module is arranged to, when the master NAT device or the slave NAT device performs NAT on the message corresponding to the translation entry in replacement of other NAT devices, directly search the master NAT device or the slave NAT device for the translation entry, and perform NAT on the message corresponding to the translation entry according to the translation entry,
wherein the translation entry comprises a source network address of the message to be translated and a target network address obtained by translating the source network address.

10. The NAT apparatus according to claim 9, wherein a physical interface of the master NAT device and a physical interface of the slave NAT device belong to an identical virtual port; and
the apparatus further comprises a device arrangement module,
wherein the device arrangement module is arranged to add the physical port of the master NAT device for NAT and the physical port of the slave NAT device for NAT into the virtual port.

11. The NAT apparatus according to claim 10, wherein a virtual port group is a logic port Smartgroup formed by link aggregation.

12. The NAT apparatus according to claim 11, further comprising a traffic balancing module, wherein
the traffic balancing module is arranged to send, according to a traffic balancing table pre-generated on the logic port Smartgroup formed by link aggregation, a message received by the logic port Smartgroup to a master NAT device or a slave NAT device corresponding to the message received by the logic port Smartgroup.

13. The NAT apparatus according to claim 9, further comprising a switching module, wherein
the switching module is arranged to switch the slave NAT device to the master NAT device, enable the post-switching master NAT device to receive a message which should be translated by the pre-switching master NAT device and to directly perform NAT on the message received by the post-switching master NAT device according to a translation entry backed up in the post-switching master NAT device.

14. The NAT apparatus according to claim 9, further comprising a change message receiving module, wherein
the change message receiving module is arranged to receive a message indicating change of the master NAT device and the slave NAT device; and
the translation entry backup module is further arranged to back up the translation entry on all master NAT devices and slave NAT devices before and after the change.

15. A computer program, comprising program instructions that, when executed by a computer, cause the computer to execute the Network Address Translation (NAT) method according to any one of claims 1-8.
